(19) Europäisches Patentamt
European Patent Office
Office européen des brevets

(11) **EP 0 703 470 B1**

(12) **EUROPÄISCHE PATENTSCHRIFT**

(45) Veröffentlichungstag und Bekanntmachung des Hinweises auf die Patenterteilung:
**14.11.2001 Patentblatt 2001/46**

(51) Int Cl.⁷: **G02B 1/04**, G02B 1/08, C08J 7/04

(21) Anmeldenummer: **95112762.0**

(22) Anmeldetag: **14.08.1995**

(54) **Thermostabile Polarisatoren**

Thermostable Polarizers

Polariseurs thermostables

(84) Benannte Vertragsstaaten:
**BE CH DE FR GB IT LI NL SE**

(30) Priorität: **25.08.1994 DE 4430096**

(43) Veröffentlichungstag der Anmeldung:
**27.03.1996 Patentblatt 1996/13**

(73) Patentinhaber: **BAYER AG**
**51368 Leverkusen (DE)**

(72) Erfinder: **Ostoja Starzewski, Karl-Heinz Aleksander, Dr.**
**D-61118 Bad Vilbel (DE)**

(56) Entgegenhaltungen:
US-A- 4 812 520    US-A- 4 818 624
US-A- 4 866 147    US-A- 5 049 427

EP 0 703 470 B1

**Beschreibung**

Die Erfindung betrifft thermostabile, biegsame Polarisatoren, die eine polarisierende Schicht aus einem polyacetylen-(PAC)-haltigen Polymer (POLPAC) mit einer silikat-versiegelten Oberfläche enthalten. Ein weiterer Gegenstand der Erfindung sind solche Polarisatoren, die zusätzlich mit Deckschichten verklebt sind.

In US 4 818 624 wird die Stabilisierung von Licht-Polarisatoren durch Oberflächen-Silylierung mit einem Organosilan beschrieben. Die Wirkung ist unzureichend, da schon bei 49 bis 74°C (120 bis 165°F) nach 24 h Ausbleichung und Farbverschiebung beobachtet werden.

Die Herstellung von Laminaten aus verschiedenen Substraten mit dazwischen befindlichen Adhäsions-(kleb-) Schichten ist bekannt. In US 5 049 427 werden laminierte Polisatoren, die eine polarisierende Kernschicht aus einem PAC-haltigen Polymer und transparente Deckschichten aufweisen, wobei die Schichten mittels eines speziellen Polyurethanpolyharnstoffs verklebt werden, beschrieben.

Obwohl POLPAC-Polarisatoren bereits ausgezeichnete Eigenschaften aufweisen, ist die Stabilität bei extremen Bedingungen noch nicht ausreichend Nach Lagerung bei 90°C während 500 Stunden hat der Polarisator sich in seiner Transmission gegenüber unpolarisiertem Licht verändert, wobei die Transmissionsänderung $\Delta T_{unpol}$ mehr als 5 % beträgt.

Ein Einsatz in optischen Displays, die besonders stark der Einwirkung von Wärme ausgesetzt sind (z B Armaturenbretter in Automobilen), ist aber erst möglich, wenn unter diesen Bedingungen der Rückgang der optischen Eigenschaften $\Delta T_{unpol}$ und $\Delta P$ des Polarisators höchstens 5 % beträgt, wobei $\Delta P$ die Änderung des Polarisationsgrades ist. Konstante optische Eigenschaften von POLPAC-Polarisatoren wurden bei 100°C während 1000 Stunden nach Verklebung zwischen Glasplatten beschrieben. Solche Verbundsysteme sind jedoch für die Display-Herstellung weniger geeignet. Vielmehr sind biegsame Polarisatoren gewünscht und zwar sowohl hinsichtlich der Verarbeitungseigenschaften, als auch im Hinblick auf flexible Kunststoff-Displays.

Aufgabe der Erfindung war daher, laminierte Polarisatoren auf Basis einen PAC-haltigen Polymers herzustellen, die die vorstehend genannten Bedingungen erfüllen.

Es wurde nun überraschend gefunden, daß diese Aufgabe gelöst werden kann, wenn der POLPAC-Polarisator an seiner Oberfläche mit einer Silikatschicht versiegelt wird.

Ein weiterer Gegenstand der Erfindung ist ein laminierter, biegsamer Polarisator aus einer polarisierenden Kernschicht aus einem (PAC)-haltigen Polymer und beidseitig aufgebrachten transparenten, biegsamen Deckschichten, dadurch gekennzeichnet, daß Kernschicht und Deckschichten mit einer Silikatschicht verklebt sind und der so lamierte Polarisator biegsam ist.

Der Polarisator kann mittels der Silikatschicht auch zum Verbund mit Glasplatten, optischen Linsen oder Prismen verwendet werden. Wird der Polarisator mit einem organischen Kleber einseitig auf ein Glasdisplay oder einen anderen Glaskörper aufgeklebt, so genügt es, seine freie Oberfläche durch Silikatisierung zu schützen.

Die Silikatschichten werden auf die Kernschicht und/oder die Deckschichten vorzugsweise in Form einer wässrigen Losung aufgebracht.

Geeignete wässrige Lösungen von Silikaten sind die bekannten wässrigen Lösungen von Natron- und Kaliwasserglas

Übliche Wasserglassorten haben im Falle von Natronwasserglas Feststoffgehalte von 25 bis 60 Gew.-% und $SiO_2$-Gehalte von 20 bis 40 Gew.-%; der Rest des Feststoffgehaltes ist $Na_2O$; und im Falle von Kaliwasserglas Feststoffgehalte von 25 bis 40 Gew.-% und $SiO_2$-Gehalte von 20 bis 30 Gew -%, der Rest des Feststoffgehaltes ist $K_2O$. Um dünnere Silikatschichten zu erhalten, können diese Lösungen noch mit Wasser verdünnt werden.

Bevorzugt sind möglichst hohe $SiO_2$-Anteile, das sind solche, bei denen das Gewichtsverhältnis $SiO_2/Na_2O$ $\geq 3$ bzw. $SiO_2/K_2O \geq 2,2$ ist.

Durch die Verwendung der Silikatschichten erübrigen sich organische Klebstoffe, wie sie in großer Zahl in US 5 049 427 beschrieben sind.

Die Silikatschichten stabilisieren die Eigenschaften des PAC-Polarisators bereits in einer Schichtdicke von $\leq$ 2 $\mu$m. Vorzugsweise werden 100 mg bis 2 g Wasserglas (Feststoff)/m$^2$ zu verklebende Fläche benötigt, um eine thermostabile Verklebung des Laminates zu erreichen.

In einer bevorzugten Ausführungsform werden Kernschicht und/oder Deckschicht vor der Beschichtung mit der Silikatlösung einer Behandlung mit einem Silan oder mit einem Borat unterworfen. Diese Maßnahme verbessert insbesondere die Verbundfestigkeit.

Geeignete Silane entsprechen der Formel:

$$Si\,(R_1)_n\,(R_2)_{4-n}$$

worin

R$_1$  unabhängig voneinander Halogen oder Alkoxy,
R$_2$  unabhängig voneinander Alkyl oder Alkenyl und
n  eine Zahl 2, 3 oder 4 bedeuten.

Alkyl- und Alkoxyreste R$_1$ und R$_2$ können substituiert sein.

Geeignete Silane sind z.b. Tetramethoxysilan, Tetraethoxysilan, Methyltrimethoxysilan, Dimethyldimethoxysilan, Ethyltriethoxysilan, Dimethyldichlorsilan, Vinylmethyldichlorsilan, Vinyltriethoxysilan. Die Silane können auch in die Silikatlösung direkt eingemischt, z.B. einemulgiert werden.

Geeignete Borate sind z.B. Borsäure und Borax. Borsäure und Borate können auch direkt in die Wasserglaslösung eingemischt bzw. darin gelöst werden.

Die Silane und Borate werden insbesondere so aufgebracht, daß Kernschicht und/oder Deckschicht in eine Lösung der Verbindung oder, falls die Verbindung flüssig ist, in die reine Verbindung getaucht und wieder heraus genommen wird. Die dabei aufgenommene Menge ist so gering, daß sie durch Wiegen nicht sicher feststellbar ist, aber üblicherweise unter 1 g/m$^2$ beträgt.

Die Deckschichten haben z.B. Dicken von 5 μm bis 1 mm, bevorzugt 20 bis 200 μm. Die polarisierende Kernschicht hat z.B. eine Dicke von 1 bis 200 um, bevorzugt 5 bis 50 μm.

Als Deckschichten kommen beispielsweise aromatische Polyester, Polyacrylnitrile, Poly(meth)acrylate, Polysulfone, aromatische Polycarbonate, Celluloseacetate, Celluloseacetobutyrate, Polyamide, Polyhydantoine, Polyimide, Polyamidimide, Polyparaphenylenbenzo-bis-imidazole und -oxazole und Polyetherketone in Frage, wobei Polyester, Poly(meth)acrylate, Polycarbonate und Celluloseester bevorzugt sind. Die Transparenz dieser Materialien ist ihr wichtigstes Merkmal. Sie werden im allgemeinen als Folien eingesetzt.

Die polarisierende Kernschicht ist ein Polarisator aus (PAC)-haltigen Polymerprodukten, deren Matrix ein Polymer mit polaren Gruppen ist, und die einen maximalen Polarisationsgrad P von mindestens 90 %, bevorzugt mindestens 95 %, besonders bevorzugt mindestens 98 %, und ein maximales dichroitisches Verhältnis Q$_E$ von 5 oder größer, vorzugsweise 10 oder größer haben, beides bezogen auf den Bereich des sichtbaren Lichts. Diese Polarisatoren werden als Folien eingesetzt, an denen durch Verstrecken eine Vorzugsrichtung erzeugt wurde. Der Verstreckungsgrad ε beträgt mehr als 200 %, bevorzugt mindestens 400 %, besonders bevorzugt 500 % bis 1 000 %.

Der Polarisationsgrad P für linear polarisiertes Licht und der Verstreckungsgrad ε sind wie folgt definiert:

$$P = \frac{\text{Transmission in Durchlaßstellung minus Transmission in Sperrstellung}}{\text{Transmission in Durchlaßstellung plus Transmission in Sperrstellung}} \times 100$$

$$\varepsilon = \frac{I-I_o}{I_o} \cdot 100$$

(I = Länge nach dem Verstrecken; I$_o$ = Länge vor dem Verstrecken)

Die Herstellung PAC-haltiger Polymerprodukte ist z.B. aus US 5 049 427 bekannt. Dabei wird Acetylen in Gegenwart eines geeigneten Katalysators in einer Polymerlösung polymerisiert.

Beispiele für geeignete Polymere sind Polyvinylchlorid, Polyvinylbutyral, Polyvinylalkohol (PVA), teilverseiftes Polyvinylacetat (PVAC) und andere Vinylalkohol enthaltende (Co)-Polymere, Polyacrylnitril, Acrylnitril enthaltende Copolymere, Polyvinylpyrrolidon, Methylcellulose und andere Cellulose-Derivate sowie Polycarbonat. Bevorzugt werden Lösungen von PVA und teilverseiftem PVAC eingesetzt.

Lösungsmittel für die Polymere sind beispielsweise N-Methylpyrrolidon (NMP), Dimethylformamid (DMF), Dimethylsulfoxid (DMSO) u.a. Die Konzentration des Polymer im Lösungsmittel beträgt 1 bis 20 Gew.-%, bevorzugt 2 bis 10 Gew.-%.

Die erfindungsgemäßen laminierten Polarisatoren zeichnen sich durch eine Reihe hervorragender Eigenschaften aus:

1. eine hohe Lichtdurchlässigkeit,
2. ein hohes Maß an Lichtechtheit
3. Thermostabilität der polarisierenden Kernschicht
4. ausgezeichnete mechanische Eigenschaften

Die erfindungsgemäßen Polarisatoren eignen sich für alle Einsatzgebiete, in denen Polarisationsfolien Verwendung finden, insbesondere in der Optik (z.B Polarisationsmikroskope, Fotografie, Antireflexausrüstung bei Sonnen- und Skibrillen) und für Displays, z.B. in Uhren, Taschenrechnern, Laptops, Computern, Anzeigen, Projektionsdisplays, Videospielen, Camcordern und Flachbildfernsehern.

Bei 80°C besitzen selbst unkaschierte POLPAC-Folien ohne Stabilisatoren gute Stabilität, wobei die Veränderungen in der Transmission (ΔT) nach 500 Stunden bei 80°C an Luft 2-3 % und im Polarisationsgrad (ΔP) unter 1 % betragt.

Der erfindungsgemäße Polarisator kann neben dem Polyacetylen zusätzliche, dichroitische Substanzen, z. B. Iod oder dichroitische Farbstoffe, enthalten. Polyacetylen macht jedoch wenigstens 50 Gew.-%, vorzugsweise wenigstens 80 Gew.-% der Gesamtmenge an dichroitischen Substanzen aus.

**Beispiele**

**Beispiel 1**

Eine um 700 % gereckte POLPAC-Folie mit einer Schichtdicke von 11 μm hatte bei 600 nm eine Transmission T von 38,7 % und einen Polarisationsgrad P von 99,99 %. Nach 500 Stunden bei 80°C war die Transmission auf 41,7 % gestiegen und der Polarisationsgrad nur auf 99,89 % gefallen.

**Beispiel 2**

Die gleiche Folie wie in Beispiel 1 wurde bei 90°C gehalten. Hierbei stieg die Transmission bei 600 nm bereits nach 270 Stunden um 5,1 %-Punkte, wobei der Polarisationsgrad um 1,84 %-Punkte fiel.

**Beispiel 3**

Die POLPAC-Folie wurde in eine wässrige Natriumsilikat-Lösung getaucht und danach getrocknet. Die Transmission T bei 600 nm betrug 36,3 % bei einem Polarisationsgrad P von 99,95 %. Nach 1446 Stunden bei 90°C waren die Werte praktisch unverändert: T = 36,6 %, P = 99,96 %.

**Beispiel 4**

Eine Polyvinylalkohol-Polyacetylenfolie (A) mit einem Polyacetylengehalt von 1,5 Gew.-% wurde um ca. 600 % gereckt. Die Folie hatte eine Dicke nach dem Recken von 12 μm.

Diese Folie wurde wie folgt laminiert:

Ca 100 μm dicke Folien aus Cellulosetriacetat (CTA) wurden einseitig mit Natronwasserglas beschichtet. Auf eine dieser mit Natronwasserglas beschichteten CTA-Folien wurde auf die mit Natronwasserglas beschichtete Seite die vorstehend beschriebene Polyvinylalkohol-Polyacetylenfolie aufgebracht. Eine zweite Cellulosetriacetatfolie wurde mit ihrer mit Natronwasserglas beschichteten Seite auf die freie Oberfläche der Polyvinylalkohol-Polyacetylenfolie aufgebracht. Der Folienverbund wurde durch einen Gummikalander laufen gelassen und anschließend bei 80°C 10 Minuten ausgehärtet

Danach wurden die optometrischen Daten bei Licht der Wellenlänge 600 nm ermittelt: T = 35,2 %, P = 99,9 %

Nach Lagerung bei 90°C während 500 Stunden änderten sich die Werte nicht. Nach Lagerung bei 160°C während 16 Stunden wurden folgende Werte ermittelt: T = 35,1 %, P = 99,9 %.

**Beispiel 5**

Eine POLPAC-Folie wurde 5 Minuten in eine Tetraethoxisilan/THF-Lösung, die zu 10 Gew.-% Silan enthielt, getaucht, getrocknet und anschließend zwischen 2 CTA-Folien der Dicke 100 μ geklebt. Dazu wurde die POLPAC-Folie auf eine CTA-Folie gelegt, die einseitig mit einer Natriumsilikat-Lösung bestrichen war. Danach wurde eine zweite ebenfalls mit Natriumsilikat-Lösung beschichtete CTA-Folie mit der feuchten Silikatschicht auf die noch ungeschützte POLPAC-Seite gelegt, der Folienverbund durch die Gummiwalzen eines Kalanders zusammengepreßt und 5 Min bei 95°C getrocknet. Der Verbund hatte eine hohe Festigkeit, sodaß beim gewaltsamen Trennen entweder die Kernschicht zerfaserte oder die CTA-Folie riß. Der Verbund war so biegsam, daß er mehrfach hin und her gebogen werden konnte, ohne daß er brach oder seine ausgezeichnete Thermostabilität verlor.

Die Stabilität der Verbundfolie wurde bei 120°C getestet. Die Transmission vor dem Wärmetest gemessen bei 600 nm betrug 36.6 % mit einem Polarisationsgrad von 99,9%. Nach 1000 Stunden bei 120°C an Luft war T nur auf 36,1 % gesunken, der Polarisationsgrad betrug weiterhin 99,9 %.

**Patentansprüche**

1. Thermostabiler, biegsamer Polarisator mit einer polarisierenden Schicht aus einem polyacetylenhaltigen Polymer, **dadurch gekennzeichnet, dass** er silikatversiegelte Oberflächen aufweist.

2. Polarisator nach Anspruch 1, **dadurch gekennzeichnet, dass** er zusätzlich beidseitig aufgebrachte transparente, biegsame Deckschichten aufweist, die mit der polarisierenden Schicht durch Silikatschichten verklebt sind.

3. Polarisator nach Anspruch 1 oder 2, **dadurch gekennzeichnet, dass** das Polymer wenigstens teilweise Polyvinylalkohol ist.

4. Polarisator nach einem oder mehreren der vorangegangenen Ansprüche 1 bis 3, **dadurch gekennzeichnet, dass** zusätzliche dichroitische Substanzen enthalten sind.

5. Verfahren zur Herstellung eines Polarisators nach Anspruch 1 bis 4, **dadurch gekennzeichnet, dass** die Versiegelung der Oberfläche mit einer Silikatlösung durchgeführt wird.

6. Verfahren nach Anspruch 5, **dadurch gekennzeichnet, dass** die Versiegelung der Oberfläche mit Natron- oder Kali-Wasserglas durchgeführt wird.

7. Verfahren gemäß Anspruch 5 oder 6, **dadurch gekennzeichnet, dass** die Versiegelung der Oberfläche mit 100 mg bis 2 g Wasserglas feststoffgehalte/$m^2$ zu versiegelnde Fläche durchgeführt wird.

8. Verfahren gemäß einem oder mehreren der vorangegangenen Ansprüche 5 bis 7, **dadurch gekennzeichnet, dass** die polarisierende Schicht und/oder die Deckschichten vor der Beschichtung mit der Silikatlösung einer Behandlung mit einem Silan oder mit einem Borat unterworfen werden.

9. Verfahren gemäß einem oder mehreren der vorangegangenen Ansprüche 5 bis 7, **dadurch gekennzeichnet, dass** der Silikatlösung ein Silan und/oder ein Borat zugemischt wird.

10. Verfahren gemäß den Ansprüchen 8 oder 9, **dadurch gekennzeichnet, dass** das Silan der Formel

$$Si(R_1)_n(R_2)_{4-n}$$

entspricht, worin

$R_1$ unabhängig von einander Halogen oder Alkoxy

$R_2$ unabhängig voneinander Alkyl oder Alkenyl und

n eine Zahl 2, 3 oder 4 bedeutet.

**Claims**

1. Thermostable, flexible polarizer having a polarizing layer of a polyacetylene-containing polymer, **characterized in that** it has silicate-sealed surfaces.

2. Polarizer according to Claim 1, **characterized in that** it additionally has transparent, flexible outer layers applied to both sides and bonded to the polarizing layer by means of silicate layers.

3. Polarizer according to Claim 1 or 2, **characterized in that** the polymer is at least partly polyvinyl alcohol.

4. Polarizer according to one or more of the preceding Claims 1 to 3, **characterized in that** it contains additional, dichroic substances.

5. Process for producing a polarizer according to Claims 1 to 4, **characterized in that** the sealing of the surface is carried out by means of a silicate solution.

**6.** Process according to Claim 5, **characterized in that** the sealing of the surface is carried out by means of sodium water glass or potassium water glass.

**7.** Process according to Claim 5 or 6, **characterized in that** the sealing of the surface is carried out by means of from 100 mg to 2 g of solids content of water glass/m$^2$ of area to be sealed.

**8.** Process according to one or more of the preceding Claims 5 to 7, **characterized in that** the polarizing layer and/or the outer layers are treated with a silane or a borate before coating with the silicate solution.

**9.** Process according to one or more of the preceding Claims 5 to 7, **characterized in that** the silicate solution is admixed with a silane and/or a borate.

**10.** Process according to Claim 8 or 9, **characterized in that** the silane conforms to the formula

$$Si(R_1)_n(R_2)_{4-n}$$

in which

the $R_1$ radicals, independently of one another, are halogen or alkoxy,
the $R_2$ radicals, independently of one another, are alkyl or alkenyl, and
n is the number 2, 3 or 4.

**Revendications**

**1.** Polariseur flexible, thermostable avec une couche polarisante en un polymère contenant du polyacétylène, **caractérisé en ce qu'**il présente une surface vitrifiée au silicate.

**2.** Polariseur suivant la revendication 1, **caractérisé en ce qu'**il présente en outre, des couches de recouvrement flexibles, transparentes, appliquées sur les deux faces, qui sont collées à la couche polarisante par les couches de silicate.

**3.** Polariseur suivant la revendication 1 ou 2, **caractérisé en ce que** le polymère est au moins partiellement, du poly (alcool vinylique).

**4.** Polariseur suivant l'une ou plusieurs des revendications précédentes 1 à 3, **caractérisé en ce qu'**il contient des substances dichroïques supplémentaires.

**5.** Procédé de préparation d'un polariseur suivant les revendications 1 à 4, **caractérisé en ce que** la vitrification de la surface est réalisée avec une solution de silicate.

**6.** Procédé suivant la revendication 5, **caractérisé en ce que** la vitrification de la surface est réalisée avec du silicate de sodium ou de potassium.

**7.** Procédé suivant la revendication 5 ou 6, **caractérisé en ce que** la vitrification de la surface est réalisée avec 100 mg à 2 g de verre soluble (teneur en matières solides)/m$^2$ de surface à vitrifier.

**8.** Procédé suivant l'une ou plusieurs des revendications précédentes 5 à 7, **caractérisé en ce que** la couche polarisante et/ou les couches de recouvrement sont soumises, avant le revêtement avec la solution de silicate, à un traitement avec un silane ou avec un borate.

**9.** Procédé suivant l'une ou plusieurs des revendications précédentes 5 à 7, **caractérisé en ce que** l'on mélange à la solution de silicate, un silane et/ou un borate.

**10.** Procédé suivant les revendications 8 ou 9, **caractérisé en ce que** le silane a la formule :

$$Si(R_1)_n(R_2)_{4-n}$$

où

$R_1$ représentent indépendamment l'un de l'autre, un atome d'halogène ou un radical alcoxy ;
$R_2$ représentent indépendamment l'un de l'autre, un radical alcoyle ou alcényle, et
n représente le nombre 2, 3 ou 4.